# FASCICULE DE BREVET EUROPEEN

(11) **EP 2 230 774 B1**
(45) Date de publication et mention de la délivrance du brevet: **05.12.2012**
(21) Numéro de dépôt: 10002838.0
(22) Date de dépôt: 18.03.2010
(51) Int. Cl.: H04B 5/00

(54) **Procédé pour établir une liaison de données entre deux processeurs, notamment dans un chipset NFC**
Verfahren zur Herstellung einer Datenverbindung zwischen zwei Prozessoren, insbesondere in einem NFC-Chipset
Method for establishing a data-link between two processors, in particular within a NFC-chipset

(30) Priorité: 20.03.2009 FR 0901315
(43) Date de publication de la demande: 22.09.2010
(73) Titulaire: Inside Secure, 13856 Aix-en-Provence Cedex 3 (FR)
(72) Inventeur: Charrat, Bruno, 13090 Aix en Provence (FR)
(74) Mandataire: Marchand, André

(56) Documents cités:
- EP-A- 1 909 431
- WO-A-02/01497
- FR-A- 2 914 800
- US-A- 6 073 855

## Description

La présente invention concerne un procédé pour établir une liaison de données entre deux processeurs.

La présente invention concerne également, mais non exclusivement, la technologie NFC (Near Field Communication) ainsi que des architectures de chipsets NFC, c'est-à-dire des ensembles de puces comprenant au moins un composant NFC.

Un axe de développement de la technologie NFC ayant fait l'objet d'importants investissements ces dernières années consiste dans l'intégration de contrôleurs NFC dans des objets portables de type téléphone mobile ou équivalent (par exemple les assistants numériques personnels ou "PDA" équipés d'une fonction de téléphone mobile). Cela permet d'utiliser de tels objets portables comme moyen de paiement, de contrôle d'accès (métro, autobus, etc.) et d'offrir à l'utilisateur toutes les autres applications de la technologie NFC comme la lecture d'étiquettes ou de cartes électroniques sans contact.

Certaines applications nécessitent un niveau de sécurité élevé, telles les applications au paiement ou au contrôle d'accès. De telles applications doivent être gérées par un processeur sécurisé, comportant des fonctions de cryptographie pour l'authentification de l'utilisateur et/ou l'authentification du dispositif portable vis-à-vis d'un terminal de transaction. Or, un téléphone mobile possède déjà un processeur sécurisé, en l'espèce le processeur de la carte SIM ("Subscriber Identité Module").

Un enjeu industriel important est donc apparu dès les premiers développements de la technologie NFC, en ce qui concerne la question de savoir si la sécurité des applications NFC devait être confiée au processeur de la carte SIM où à un second processeur sécurisé qui serait fourni par les fournisseurs d'applications NFC.

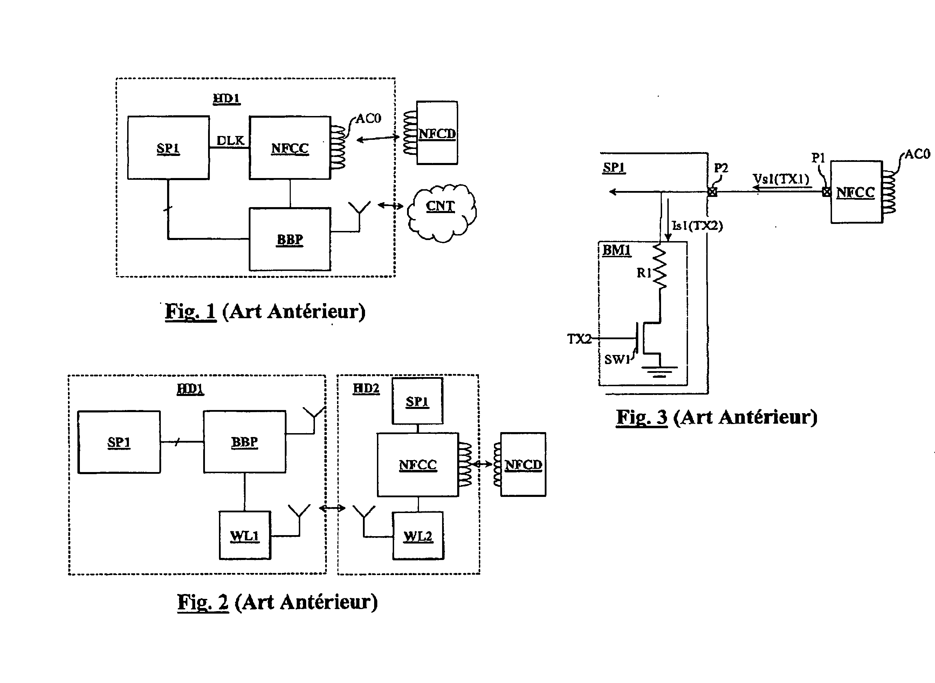

On a donc envisagé diverses architectures de chipsets NFC dédiées à la téléphonie, certaines utilisant le processeur de la carte SIM pour gérer les applications NFC, d'autres prévoyant un second processeur sécurisé, les deux solutions pouvant être également combinées. La figure 1 représente schématiquement un exemple d'architecture de chipset NFC utilisant un processeur sécurisé de carte SIM pour gérer des applications NFC. Le chipset NFC est intégré dans un dispositif portable HD1 ("Handheld Device"), par exemple un téléphone mobile, et comporte un processeur sécurisé SP1 de carte SIM, un processeur en bande de base BBP pour établir une communication téléphonique via réseau de téléphonie cellulaire, et un contrôleur NFC désigné "NFCC", équipé d'une bobine d'antenne AC0, pour recevoir et émettre des données par couplage inductif. Le processeur SP1 est relié au contrôleur NFCC en tant que processeur hôte par l'intermédiaire d'une liaison de données fonctionnant selon un protocole déterminé, par exemple le protocole SWP ("Single Wire Protocol"). Le processeur en bande de base BBP est également connecté au contrôleur NFCC en tant que processeur hôte, par exemple au moyen d'une liaison asynchrone gérée par des ports UART ("Unitrersal Asynchronous Receiver Transiter"). Accessoirement, le processeur SP1 peut aussi être directement relié au processeur BBP par un bus ISO 7816.

Dans un tel chipset NFC, le processeur sécurisé SP1 assure à la fois la gestion de la sécurité des liaisons téléphoniques que le processeur BBP peut établir avec un réseau de téléphonie cellulaire CNT, et la sécurité d'applications NFC (paiement, contrôle d'accès, etc.). Au cours d'une application NFC, le processeur SP1 se relie à un dispositif externe NFCD par l'intermédiaire du contrôleur NFCC et d'un canal de communication sans contact que le contrôleur NFCC établi avec le dispositif externe par couplage inductif.

Un second processeur sécurisé peut aussi être connecté au contrôleur NFCC en tant que troisième processeur hôte, pour gérer d'autres applications NFC. Au terme d'un consensus industriel récent, i1 s'avère toutefois que la carte SIM continuera à être utilisée à l'avenir pour gérer des applications NFC, ce qui explique l'ajout d'un port SWP dans les cartes SIM de dernière génération, dites cartes "SZM-NFC".

Le déploiement des applications NFC dans les téléphones mobiles se heurte par ailleurs à des contraintes de coût. L'intégration de contrôleurs NFC nécessite en effet de modifier substantiellement les cartes mères des téléphones mobiles, ce qui implique des investissements industriels conséquents et une augmentation notable de leur prix de revient. Ainsi, en raison de son coût, la technologie NFC reste confidentielle et ne pourra être intégrée dans 1a plupart des modèles de téléphones mobiles que lorsque la demande du marché sera suffisante.

Afin d'offrir 1a technologie NFC à l'utilisateur d'un téléphone mobile sans grever le prix de revient de ce dernier, un concept d'architecture NFC a été proposé, qui consiste à "externaliser" le contrôleur NFC en le montant sur un support distinct de la carte mère du téléphone. Cette solution est illustrée schématiquement sur la figure 2. Le processeur SP1 et le processeur en bande de base BBP sont montés dans le téléphone mobile HD1 et sont reliés conventionnellement par un bus ISO 7816, tandis que le contrôleur NFCC est monté dans un dispositif portable distinct HD2, par exemple une carte plastique appelée "sticker" destinée à être collée au dos d'un téléphone mobile. Une liaison de données sans fil est établie entre le processeur BBP et le contrôleur NFC, au moyen d'émetteurs-récepteurs WL1, WL2 de type Wifi ou Bluetooth®. Cette liaison de données sans fil permet d'utiliser le processeur en bande de base BBP pour gérer des applications NFC non sécurisées mais nécessitant une puissance de calcul importante (par exemple la lecture de fichiers vidéo ou musicaux).

Toutefois, dans une telle architecture de chipset NFC, le processeur SP1 de la carte SIM n'est plus relié au contrôleur NFCC. On ajoute donc, dans le dispositif HD2, un second processeur sécurisé SP2, connecté au contrôleur NFCC et dédié aux applications NFC.

La plupart des téléphones mobiles étant équipés d'un émetteur-récepteur wifi ou Bluetooth®, une telle architecture de chipset NFC offre l'avantage de ne nécessiter aucun surcoût matériel dans la réalisation de la carte mère du téléphone mobile, et ne nécessite que des moyens logiciels.

Le surcoût de l'émetteur-récepteur WL2 de type Wifi ou Bluetooth® dans le dispositif portable HD2 est cependant non négligeable, ainsi que l'ajout du second processeur SP2 pour gérer des applications sécurisées. La consommation électrique de l'émetteur-récepteur WL2 n'est également pas négligeable et nécessite la prévision, dans le dispositif HD2, d'une source de tension spécifique, telle une pile rechargeable et/ou des cellules photovoltaïques.

Ainsi, des modes de réalisation de la présente invention concernent un moyen et un procédé pour réaliser, d'une manière simple et à moindre coût, une liaison de données sans contact entre deux processeurs, notamment entre un contrôleur NFC et un processeur hôte du contrôleur NFC.

Des modes de réalisation de la présente invention concernent également un moyen et un procédé pour réaliser une architecture' de chipset NFC dans laquelle un contrôleur NFC est monté sur un support distinct de celui recevant un processeur hôte, mais dans laquelle une liaison de données est établie entre le processeur hôte et le contrôleur NFC.

Plus particulièrement, des modes de réalisation de la présente invention concernent un procédé pour établir une liaison de données entre un premier processeur et un second processeur, comprenant des étapes consistant à : par l'intermédiaire d'un port de communication à contact du premier processeur, émettre un premier signal porteur de données sous forme d'un premier signal modulé; par l'intermédiaire d'un port de communication à contact du second processeur, émettre un second signal porteur de données sous forme d'un second signal modulé ; prévoir un premier coupleur et le connecter au port de communication à contact du premier processeur ; prévoir un second coupleur et le connecter au port de communication à contact du second processeur ; établir un couplage sans contact entre les premier et second coupleurs ; et, par l'intermédiaire des coupleurs, et au moyen d'au moins un signal RF, transférer le premier signal porteur de données au port de communication à contact du second processeur et transférer le second signal porteur de données au port de communication à contact du premier processeur.

Selon un mode de réalisation, le procédé comprend des étapes consistant à : au moyen du premier coupleur, recevoir ou capter le premier signal modulé, en extraire le premier signal porteur de données et transférer le premier signal porteur de données vers le second coupleur au moyen du signal RF ; au moyen du second coupleur, recevoir ou capter le second signal modulé, en extraire le second signal porteur de données et transférer 1e second signal porteur de données au premier coupleur au moyen du signal RF ou d'un autre signal RF ; recevoir le premier signal porteur de données et fournir au port de communication à contact du second processeur un troisième signal modulé qui émule le premier signal modulé ; et au moyen du premier coupleur, recevoir le second signal porteur de données et fournir au port de communication à contact du premier processeur un quatrième signal modulé qui émule le second signal modulé.

Selon un mode de réalisation, le procédé comprend des étapes consistant à : au moyen du premier coupleur, émette le signal RF et moduler le signal RF de manière qu'il présente un paramètre qui est modulé en fonction du premier signal porteur de données ; au moyen du second coupleur, démoduler le signal RF afin de récupérer le premier signal porteur de données, et injecter dans le signal RF un signal de rétromodulation qui présente un paramètre qui est modulé en fonction du second signal porteur de donnée ; et au moyen du premier coupleur, capter le signal de rétromodulation et le démoduler afin de récupérer le second signal porteur de données.

Selon un mode de réalisation, le procédé comprend des étapes consistant à : au moyen du premier coupleur, émettre un premier signal RF et moduler le premier signal RF de manière qu'il présente un paramètre qui est modulé en fonction du premier signal porteur de données ; au moyen du second coupleur, démoduler le premier signal RF afin de récupérer le premier signal porteur de données, émettre un second signal RF et moduler le second signal RF de manière qu'il présente un paramètre qui est modulé en fonction du second signal porteur de données ; et au moyen du premier coupleur, démoduler le second signal RF afin de récupérer le second signal porteur de données.

Selon un mode de réalisation, le premier signal modulé est une tension électrique modulée et le second signal modulé est un signal de courant modulé en présence de la tension électrique modulée.

Selon un mode de réalisation, le premier processeur est un contrôleur NFC comprenant en sus du port de communication à contact un circuit d'interface sans contact fonctionnant par couplage inductif, et le second processeur est un processeur hôte du contrôleur NFC.

Selon un mode de réalisation, le second processeur est un processeur sécurisé de carte SIM.

Selon un mode de réalisation, le couplage sans contact est un.couplage inductif, un couplage à champ électrique ou un couplage capacitif.

Des modes de réalisation de l'invention concernent également un procédé pour conduire une transaction entre le processeur hôte d'un contrôleur NFC et un dispositif NFC, comprenant une étape d'établissement d'une liaison de données entre 1e processeur hôte et le dispositif NFC par l'intermédiaire du contrôleur NFC, dans lequel l'étape d'établissement d'une liaison de données entre le processeur hôte et le dispositif NFC comprend l'établissement d'une liaison de données entre le processeur hôte et le contrôleur NFC conduite conformément au procédé décrit ci-dessus.

Des modes de réalisation de l'invention concernent également un dispositif de traitement et de transfert de données comprenant : un premier processeur configuré pour fournir, sur un port de communication à contact, un premier signal porteur de données sous forme d'un premier signal modulé, un second processeur configuré pour fournir, sur un port de communication à contact, un second signal porteur de données sous forme d'un second signal modulé, un premier coupleur connecté au port de communication à contact du premier processeur, un second coupleur connecté au port de communication à contact du second processeur, et dans lequel les coupleurs sont couplés par un couplage sans contact, le premier coupleur est configuré pour : recevoir ou capter le premier signal modulé, en extraire le premier signal porteur de données et transférer le premier signal porteur de données au second coupleur, au moyen d'un signal RF, le second coupleur est configuré pour : recevoir ou capter le second signal modulé, en extraire le second .signal porteur de données et transférer le second signal porteur de données au premier coupleur, au moyen du signal RF ou d'un autre signal RF, et recevoir le premier signal porteur de données, et fournir au port de communication à contact du second processeur un troisième signal modulé qui émule le premier signal modulé, et le premier coupleur est également configuré pour : recevoir le second signal porteur de données et fournir au port de communication à contact de communication à contact du premier processeur un quatrième signal modulé qui émule le second signal modulé.

Selon un mode de réalisation, le premier coupleur est configuré pour : émettre le signal RF et moduler le signal RF de manière qu'il présente un paramètre qui est modulé en fonction du premier signal porteur de données, le second coupleur est configuré pour : injecter dans le signal RF un signal de rétromodulation qui présenté un paramètre qui est modulé en fonction du second signal porteur de données, démoduler le signal RF afin de récupérer le premier signal porteur de données, et le premier coupleur est également configuré pour : capter le signal de rétromodulation et le démoduler afin de récupérer le second signal porteur de données.

Selon un mode de réalisation, le premier coupleur est configuré pour : émettre un premier signal RF et moduler le premier signal RF de manière qu'il présente un paramètre qui est modulé en fonction du premier signal porteur de données, le second coupleur est configuré pour : démoduler le premier signal RF afin de récupérer le premier signal porteur de données, émettre un second signal RF et moduler le second signal RF de manière qu'il présente un paramètre qui est modulé en fonction du second signal porteur de données, et le premier coupleur est également configuré pour : démoduler le second signal RF afin de récupérer le second signal porteur de données.

Selon un mode de réalisation, le premier signal modulé est une tension électrique modulée et le second signal modulé un signal de courant modulé en présence de là tension électrique modulée.

Selon un mode de réalisation, le premier processeur est un contrôleur NFC comprenant en outre un circuit d'interface sans contact fonctionnant par couplage inductif, et le second processeur est un processeur hôte du contrôleur NFC.

Selon un mode de réalisation, le couplage sans contact est un couplage inductif, un couplage à champ électrique ou un couplage capacitif.

Des modes de réalisation de l'invention seront décrits plus en détail dans ce qui suit, à titre non limitatif et en relation avec les figures jointes parmi lesquelles :
- les figures 1 et 2 précédemment décrites représentent des exemples d'architectures de chipsets NFC,
- la figure 3 représente une liaison de données classique entre deux processeurs, établie conformément au protocole SWP,
- les figures 4A, 4B sont des chronogrammes illustrant des signaux modulés selon le protocole SWP,
- les figures 5A, 5B représentent schématiquement deux coupleurs sans contact selon l'invention et des exemples d'utilisation de ces coupleurs pour établir une liaison de données entre deux processeurs,
- la figure 6 représente un mode de réalisation des coupleurs de la figure 5B,
- la figure 7 est un chronogramme montrant la forme d'un signal RF échangé par les coupleurs de la figure 6,
- la figure 8 représente un autre exemple de réalisation des coupeurs de la figure 5B,
- la figure 9. représente encore un autre exemple de réalisation des coupleurs de la figure 5B,
- la figure 10 est un chronogramme montrant la forme d'un signal RF échangé par les coupleurs de la figure 9,
- la figure 11 représente encore un autre exemple de réalisation des coupleurs de la figure 5B,
- les figures 12A, 12B sont des chronogrammes montrant la forme de signaux RF échangés par les coupleurs de la figure 11,
- la figure 13 représente schématiquement un téléphone mobile comprenant des processeurs reliés via des coupleurs sans contact, et
- les figures 14 à 16 représentent des..exemples d'architectures de chipsets comprenant des processeurs reliés via des coupleurs sans contact.

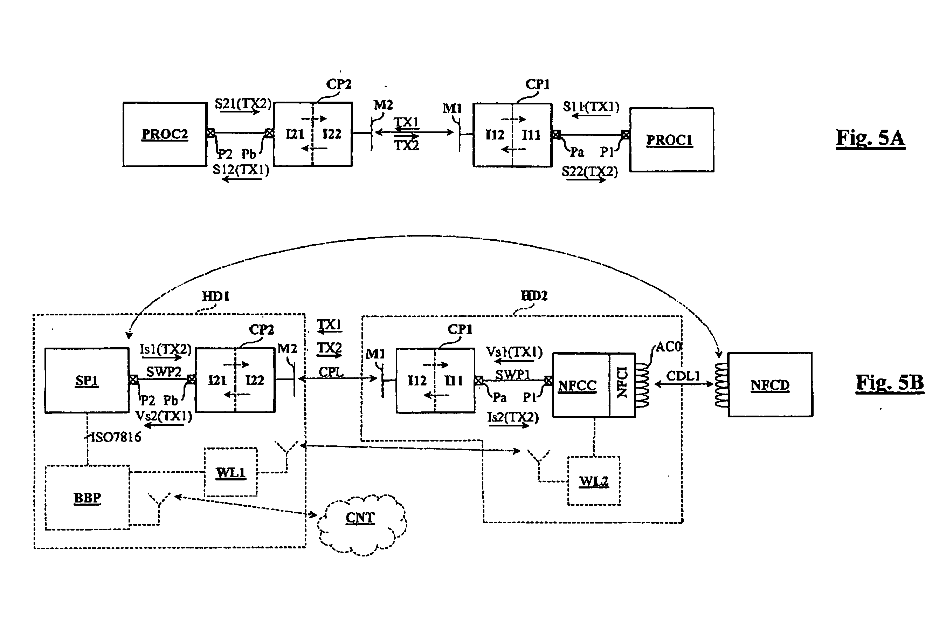

La figure 5A représente un exemple de réalisation d'une liaison de données entre deux processeurs PROC1, PROC2, au moyen de deux coupleurs sans contact CP1, CP2. Les processeurs PROC1, PROC2 sont initialement prévus pour être reliés par une liaison de données filaire. A cet effet, le processeur PROC1 est pourvu d'un port de communication à contact P1 et le processeur PROC2 est pourvu d'un port de communication à contact P2, les ports P1 et P2 étant prévus pour être interconnectés. Le processeur PROC1 émet sur le port P1. un signal numérique TX1 porteur de données DTX1, sous la forme d'un signal modulé Sm11(TX1). De même, le processeur PROC2 émet sur le port P2 un signal numérique TX2 porteur de données DTX2, sous la forme d'un signal modulé Sm21(TX2).

La forme, la nature et le type de modulation que présentent des signaux modulés Sm11 et Sm21 sont classiquement déterminés par un protocole de couche physique, soit un protocole de niveau 1 du modèle basique de référence pour l'interconnexion des systèmes ouverts, ou modèle OSI. La forme ou profil des signaux TX1, TX2 (codage des données DTX1, DTX2) est également déterminée par le protocole de couche physique tandis que les données DTX1, DTX2 qu'ils contiennent et leur agencement (découpage en trames, champs de début de trame, champ de fin de trame, codes de correction d'erreur, etc.) sont définies par un protocole de couche de liaison de données ("data link layer", protocole de niveau 2 du modèle OSI) ainsi que des protocoles de niveau supérieur (données d'application).

Il est rappelé ici que le protocole de couche physique d'une transmission de données est généralement en charge de l'activation, du maintien et de la désactivation de la liaison physique entre les éléments. Le protocole de couche physique détermine les spécifications électriques (niveaux de tension et de courant, "timing" (i.e. durée) et codage des niveaux de tension et de courant), les spécifications mécaniques (contacts physiques) et les spécifications fonctionnelles (débit de données). Il définit également l'établissement initial de la communication et la fin de la communication. Par ailleurs, le protocole de couche de liaison .de données est responsable de l'adressage physique des données à travers des trames et d'un lien de protocole d'unités de données ou "LPDU" (Link Protocol Data Units). Le protocole de couche de liaison de données est aussi en charge des notifications d'erreur, des ordres de délivrance de trame et du contrôle de débit ("flow control").

Au lieu d'interconnecter les ports P1 et P2, les coupleurs CP1, CP2 sont interposés entre les ports P1, P2. Le coupleur CP1 comporte un port Pa connecté au port P1 et le coupleur CP2 comporte un port Pb connecté au port P2. Le coupleur CP1 comprend un moyen de couplage sans contact M1 et le coupleur CP2 comprend un moyen de couplage sans contact M2. Les moyens M1, M2, sont par exemple des moyens de couplage inductif, des moyens de couplage à champ électrique ou des moyens de couplage capacitif. Ils permettent de transférer des données du coupleur CP1 vers le coupleur CP2 et vice-versa, par l'intermédiaire d'au moins une porteuse RF.

Chaque coupleur CP1, CP2 comporte une interface I11, I21 d'émulation de la couche physique du protocole utilisé par les processeurs PROC1, PROC2 et une interface de couplage sans contact I12, 122 connectée aux moyens de couplage M1, M2. L'interface d'émulation I11 est connectée au port Pa du coupleur CP1. Elle reçoit ou capte le signal Sm11 émis par le port P1 processeur PROC1, en extrait le signal TX1 porteur de données et le fournit à l'interface de couplage I12. L'interface de couplage I12 transfère le signal TX1 à l'interface de couplage I22, par l'intermédiaire des moyens de couplage M1, M2.

L'interface d'émulation I21 est connectée au port Pb du coupleur CP2. Elle reçoit ou capte le signal Sm21 émis par le port P2 du processeur PROC2, en extrait le signal TX2 porteur de données et le fournit à l'interface de couplage 122. L'interface de couplage 122 transfère le signal TX2 à l'interface de couplage I12, par l'intermédiaire des moyens de couplage M1, M2.

L'interface d'émulation I11 fournit également au port P1 du processeur PROC1 un signal S22(TX2) qui véhicule le signal TX2 porteur de données et émule le signal S21(TX2) émis par le processeur PROC2, en respectant le protocole de couche physique pour lequel le port P1 est configuré, de sorte que le processeur PROC1 peut fonctionner comme s'il était connecté directement au processeur PROC2 et comme s'il recevait le signal S21(TX2).

L'interface d'émulation I21 fournit également au port P2 un signal S12(TX1) qui véhicule le signal TX1 porteur de données et émule le signal S11(TX1) émis par le.processeur PROC1, en respectant le protocole de couche physique pour lequel le port P2 est configuré, de sorte que le processeur PROC2 peut fonctionner comme si les ports P1 et P2 étaient directement interconnectés et comme s'il recevait le signal S11(TX1).

Les coupleurs CP1, CP2 sont ainsi "transparents" vis-à-vis des processeurs PROC1, PROC2. Ils assurent un couplage de niveau 1, ou couplage de couche physique, en échangeant les signaux TX1, TX2 sans ajouter un protocole de couche de liaison de données qui leur serait propre (i.e. sans ajout de données de début ou de fin de trame, sans correction d'erreur, etc.). Comme cela apparaîtra plus loin à la lumière d'exemples, les coupleurs CP1, CP2 utilisent un protocole de couche physique sans contact qui leur est propre pour échanger les signaux TX1, TX2, ce protocole comprenant l'utilisation d'au moins une porteuse RF. Ce protocole de couche physique peut toutefois être ramené à sa plus simple expression. Par exemple, dans un mode dé réalisation, il ne comporte aucune convention de connexion ou de déconnexion de la couche physique sans contact entre les coupleurs CP1, CP2.

Les coupleurs CP1, CP2 permettent de réaliser des architectures de chipsets originales dans le domaine NFC ou dans le domaine des téléphones mobiles, par exemple l'architecture représentée sur la figure 5B. Dans cet exemple d'application, le processeur PROC1 est un contrôleur NFC désigné "NFCC". Le processeur PROC2 est un processeur sécurisé de carte SIM .désigné. "SP1". Le contrôleur NFCC est configuré pour gérer une connexion SWP ("Single Wire Protocol") via le port P1 en tant que dispositif maître. Le port P1 est donc ici un port à un seul point de connexion formant une entrée/sortie de données bidirectionnelle (full-duplex). De même, le processeur SP1 est configuré pour gérer une connexion SWP en tant que dispositif esclave, via le port P2. Il sera noté que la connexion de masse entre les processeurs NFCC et SP1 n'est pas représentée dans un souci de simplification du schéma.

Le contrôleur NFCC comprend également un circuit d'interface sans contact NFCI connecté à une bobine d'antenne AC0. Le contrôleur NFCC est configuré pour communiquer avec un dispositif NFCD externe, par exemple un terminal de paiement, une borne de contrôle d'accès, un guichet automatique, un portillon d'accès électronique, etc. Le contrôleur NFCC est par exemple le contrôleur MicroRead® commercialisé par la demanderesse, compatible avec divers protocoles (ISO 14443 A&B, ISO 15693, ISO 18092), offrant une distance de communication de l'ordre de 10 cm, comprenant des ports UART pour connecter des processeurs hôtes et un port d'interface SWP ("Single Wire Protocol") pour connecter un processeur hôte de type carte SIM-NFC.

Grâce aux coupleurs CP1, CP2, une liaison sans contact est donc établie entre les ports P1, P2. Le port maître P1 fournit une tension modulée Vs1(TX1) au coupleur CP1 et l'interface d'émulation I21 du coupleur CP2 fournit au port esclave P2 une tension modulée Vs2(TX1) qui émule la tension Vs1 et est conforme au protocole de couche physique SWP. Le port P2 fournit un courant modulé Is1(TX2) au coupleur CP2 et l'interface I11 du coupleur CP1 fournit au port P1 un courant modulé Is2(TX2) qui émule le courant Is1(TX2) et est conforme au protocole de couche physique SWP. Le contrôleur NFCC et le processeur SP1 peuvent donc échanger des données comme si leur ports P1, P2 étaient directement interconnectés.

A titre d'exemple d'application, une liaison de données sans contact CDL1 est établie entre le contrôleur NFCC et le dispositif externe NFCD, pour conduire une transaction avec l'aide du processeur sécurisé SP1. Ce dernier peut assurer tout ou partie de la transaction, au moins les phases sécurisées de la transaction telles que des phases d'authentification du processeur SP1 vis-à-vis du dispositif NFCD et/ou d'authentification du dispositif NFCD vis-à-vis du processeur SP1. A cet effet, une liaison de données est établie entre le contrôleur NFCC et le processeur hôte SP1. La liaison de données comporte une liaison SWP1 entre le contrôleur NFCC et le coupleur CP1, conforme aux spécifications SWP, une liaison sans contact CPL entre les deux coupleurs CP1, CP2, et une liaison SWP2 entre le coupleur CP2 et le processeur SP1, conforme aux spécifications SWP. Le processeur SP1, peut donc échanger des données avec le dispositif externe NFCD par l'intermédiaire d'une liaison de données résultante qui inclut les deux liaisons sans contact CDL1, CPL et le.s deux liaisons filaires SWP1, SWP2. La liaison CDL1 se distingue de la liaison CPL en ce qu'elle possède sa propre, couche de liaison de données. (par exemple ISO 14443 A&H, ISO 15693 ou ISO 18092). La gestion de la couche de liaison de données de la liaison CDL1 est assurée par le contrôleur NFCC, qui est conçu à cet effet.

Des exemples de réalisation des coupleurs CP1, CP2 prévus pour être connectés à des ports SWP seront décrits dans ce qui suit.

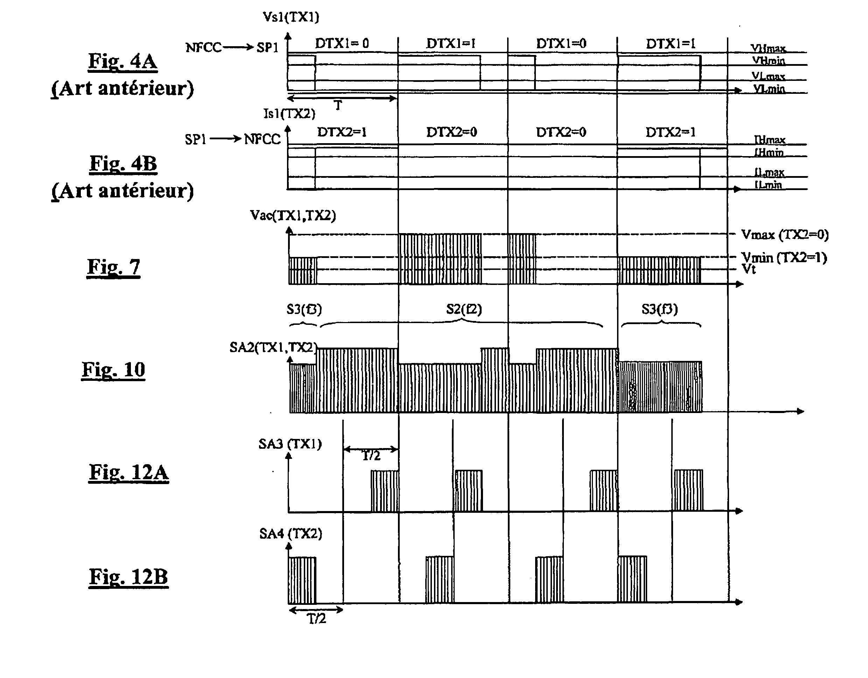

A titre de rappel, le protocole SWP est décrit dans le projet de norme industrielle ETSI TS 102 613. Les chronogrammes des figures 4A, 4B illustrent des signaux modulés intervenant dans une liaison SWP classique telle que montrée sur la figure 3, dans laquelle les ports P1 et P2 du contrôleur NFCC et du processeur SP1 sont interconnectés. La tension Vs1(TX1) émise par,le port maître P1 véhicule le signal TX1. Celui-ci comprend des données DTX1 codées de la manière suivante : lorsque DTX1=0, le signal TX1 est à 1 pendant un quart de la période d'horloge, soit T/4, et est à 0 pendant le reste de la période d'horloge. Lorsque DTX1=1, le signal TX1 est à 1 pendant trois quart de la période d'horloge, soit 3T/4, et est à 0 pendant le dernier quart de la période d'horloge. Le signal TX1 à 1 correspond à une valeur de la tension Vs1 comprise entre deux tensions hautes VHmax et VHmin. Le signal TX1 à 0 correspond à une valeur de la tension Vs1 comprise entre deux tensions basses VLmax et VLmin. Le courant Is1(TX2) est un courant consommé ou "tiré" par le port P2 en présence de la tension Vs1, et non un courant émis. Il s'agit donc d'un signal de rétromodulation qui doit être capté. Le courant Is1(TX2) véhicule le signal TX2. Celui-ci comprend des données DTX2 codées de la manière suivante : lorsque DTX2=1, le signal TX2 est à 1. Lorsque DTX2= 0, le signal TX2 est à 0. Vu du coté du récepteur maître (ici le contrôleur NFCC) TX2=1 correspond à une valeur du courant comprise entre deux courants hauts. IHmax et IHmin, et TX2=0 correspond à une valeur de courant comprise entre deux courants bas ILmax et ILmin. Quand TX2=1, la durée d'émission du courant Is1 pendant la période T peut être égale à un quart de période ou à trois quart de période puisqu'elle dépend de la durée de la tension Vs. Toujours à titre de rappel, la figure 3 représente schématiquement un exemple de circuit de rétromodulation BM1 pouvant être prévu dans le processeur hôte SP1 pour "tirer" .le courant Is1. Le circuit de rétromodulation BM1 est du type à drain ouvert ("open drain") et comprend par exemple un interrupteur SW1 qui relie le port P1 à la masse par l'intermédiaire d'une résistance R1, l'interrupteur SW1 étant piloté par le signal TX2.

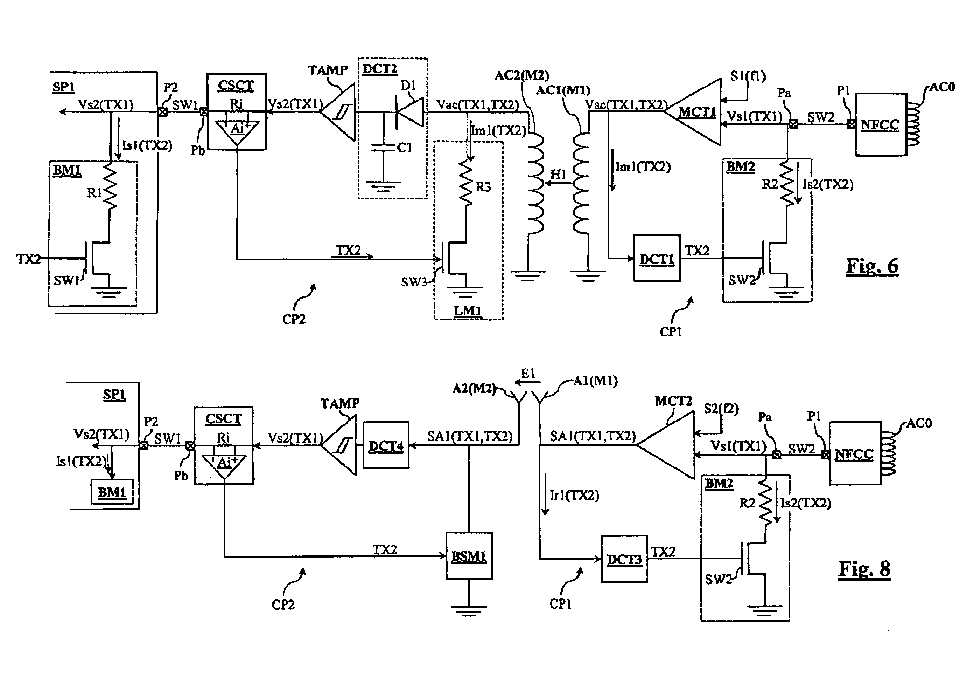

La figure 6 représente un mode de réalisation des coupleurs CP1, CP2 dans lequel les moyens de couplage M1, M2 sont des bobines d'antenne AC1, AC2 inductivement couplées.

Le coupleur CP1 comprend un modulateur RF désigné MCT1, un démodulateur DCT1 et un circuit émulateur modulateur de courant BM2. Le modulateur MCT1 comprend une première entrée connecté au port P1, recevant la tension Vs1(TX1), une seconde entrée recevant un signal RF S1(f1) de fréquence f1 fourni par un oscillateur (non représenté), et une sortie fournissant à la bobine d'antenne AC1 un signal d'antenne RF Vac. Le signal Vac est le résultat de la modulation du signal S1(f1) par la tension Vs1, par exemple une modulation d'amplitude, et présente un paramètre modulé, ici son amplitude, qui véhicule le signal TX1 porteur de données. La bobine d'antenne AC1 émet ainsi un champ magnétique modulé H1, de fréquence f1. Pour éviter des interférences avec le champ magnétique émis par l'interface NFCI du contrôleur NFCC (Fig. 5A, 5B), la fréquence f1 est de préférence différente de celle utilisée par le contrôleur NFCC. Si cette dernière est par exemple 13,56 MHz (ISO 14443 A&B, ISO 15693, ISO 18092), la fréquence f1 est par exemple choisie supérieure à la centaine de MHz.

Le démodulateur DCT1 est connecté à la bobine d'antenne AC1 et est configuré pour extraire du signal d'antenne Vac, après filtrage de la porteuse RF, un signal de rétromodulation Im1(TX2) émis par le coupleur CP2 qui véhicule le signal TX2. La sortie du démodulateur DCT1 fournit le signal TX2 au circuit émulateur modulateur de courant BM2. Le circuit BM2 présente ici la même structure que le circuit BM1 du processeur SP1 (Cf. Fig. 3 ou Fig. 6), et comprend un interrupteur SW2 reliant le port Pa à la masse par l'intermédiaire d'une résistance R2, l'interrupteur étant piloté par le signal TX2 tel que fourni par le démodulateur DCT1. Le contrôleur NFCC voit ainsi apparaître sur le port P1 le courant modulé Is2(TX2) qui émule le courant Ts1(TX2).

Le signal d'antenne Vac se répercute par couplage inductif dans la bobine d'antenne AC2 du coupleur CP2. Ce denier comprend un démodulateur RF DCT2, un amplificateur TAMP, un circuit capteur de courant CSCT et un circuit de modulation de charge LM1. Le démodulateur DCT2 a une entrée connectée à la bobine d'antenne AC2, pour recevoir le signal d'antenne modulé Vac, et une sortie fournissant à l'amplificateur TAMP le signal TX1 porteur de données. Dans le mode de réalisation où le modulateur MCT1 assure une simple modulation d'amplitude du signal Vac, le démodulateur DCT2 peut simplement comprendre une diode de redressement semi-alternance et un condensateur C1 qui filtre la porteuse RF de fréquence f1, pour ne conserver que l'enveloppe du signal Vac, correspondant au profil de la tension Vs1 soit au signal TX1.

L'amplificateur TAMP reçoit ainsi le signal TX1 dont le profil correspond au profil de la tension Vs1, et fournit la tension Vs2(TX1) qui émule la tension Vs1 (TX1). TAMP est par exemple un amplificateur de tension régulé ayant un seuil de commutation Vt et une hystérésis de commutation, pour générer des fronts de tension nets compris entre VHmax et VHmin, y compris lorsque le processeur SP1 consomme le courant Is1(TX2) sur le port P2.

Le circuit capteur de courant CSCT. est interposé entre la sortie de l'amplificateur TAMP et le port Pb du coupleur, qui est lui-même connecté au port P2 du processeur SP1. Le circuit CSCT est prévu pour capter.(au sens de "sensing") le courant Is1 "tiré" par le processeur SP2 et en extraire le signal TX2 porteur de données, qu'il fournit au circuit de modulation de charge LM1.

Il sera noté ici que, Is1 étant un courant de rétromodulation dont la durée dépend de la durée de la tension Vs2 (soit 1/4 ou 3/4 de période T), le profil du courant Is(TX2) et le profil du signal TX2 peuvent être sensiblement différents. Sur la figure 6, on voit que TX2 est appliqué par le processeur SP1 sur un terminal de contrôle de l'interrupteur SW2 (par exemple la grille d'un transistor MOS). Dans un mode de réalisation, la durée de TX2 pourrait ainsi être d'un cycle complet d'horloge tandis que la durée du courant Is1 ne serait que d'1/4 ou de 3/4 de cycle d'horloge, selon la durée de la tension Vs2. Dans d'autres modes de réalisation, la durée de TX2 pourrait être choisie par convention de 3/4 de cycle d'horloge, voire moins (une durée d'1/4 de cycle d'horloge permettrait de transférer les données DTX2). Ainsi, lorsque l'on indique, dans la présente description et dans les revendications, que le coupleur CP2 est configuré pour "capter le signal modulé Is1 et en extraire le signal TX2 porteur de données", cette indication est approximative et ladite "extraction du signal porteur de données" peut correspondre à plusieurs modes de réalisation :
- le signal extrait TX2 n'est en réalité pas tout à fait identique au signal initial TX2 (tel qu'appliqué à l'interrupteur SW1) et son profil correspond au profil du courant Is1,
- le signal extrait TX2 est identique au signal initial TX2 et son profil ne correspond pas au profil du courant Is1. Dans ce cas, le circuit CSCT doit être configuré pour prolonger la durée du signal TX2=1 de manière qu'elle couvre la durée du signal TX2 prévue par convention, par exemple 3/4 de cycle d'horloge.

Enfin, le circuit de modulation de charge LM1 comprend par exemple un interrupteur SW3 qui relie une borne de la bobine d'antenne AC2. à la masse, par l'intermédiaire d'une résistance R3. L'interrupteur SW3 est piloté par le signal TX2 fourni par le circuit capteur CSCT et. fait apparaître dans le signal d'antenne Vac un courant de rétromodulation Im1(TX2) qui se répercute par couplage inductif dans la bobine d'antenne AC1 et est récupéré par le démodulateur DCT1.

La figure 7 représente le.profil du signal d'antenne Vac en fonction des signaux modulés Vs1(TX1) et Is1(TX2). On voit que le signal Vac est doublement modulé, son enveloppe globale est l'image de la tension Vs1(TX1) mais présente des sous-modulations d'amplitude Vmax, Vmin qui sont fonction du courant Is1(TX2). Afin que ces sous-modulations ne modifient pas l'amplitude de la tension émulée Vs2 fournie au processeur SP1, l'amplificateur TAMP peut être configuré pour présenter un seuil de computation Vt qui est inférieur aux extrema de modulation d'amplitude Vmax, Vmin, qui ne dépendent que du courant Is1.

Ce mode de réalisation des coupleurs CP1, CP2, fonctionnant par couplage inductif, peut être transformé en un mode de réalisation à couplage capacitif en remplaçant les bobines d'aritenne AC1, AC2 par des plaques de couplage capacitif, ou transformé en un mode de réalisation à couplage à champ électrique en remplaçant les bobines d'antenne AC1, A2 par des antennes à champ électrique. Dans des variantes de réalisation, la modulation du signal S1 au moyen de la tension Vs1, pour fournir le signal Vac, peut être faite de diverses autres manières, notamment par modulation de phase BPSK ("Binary Phase Shift Keying"), par sauts de fréquence FSK ("Frequency Shift Keying"), etc. Egalement, l'émission du signal TX2 par modulation de charge, au moyen du circuit charge LM1, peut être faite de nombreuses autres manières, notamment par modulation de phase d'une sous-porteuse, sauts de fréquence au moyen de deux sous-porteuses, etc.

La figure 8 représente un mode de réalisation des coupleurs CP1, CP2 selon le principe du couplage à champ électrique. Les bobines d'antenne AC1, AC2 sont remplacées par des antennes à champ électrique A1, A2, par exemple des antennes dipolaires. Le modulateur MCT1 du coupleur CP1 est remplacé par un modulateur MCT2 qui reçoit à la place du signal S1 un signal RF S2 dont la fréquence f2 se situe dans le domaine UHF, par exemple une fréquence de l'ordre de quelques centaines de MHz à plusieurs Gigahertz. Le circuit modulateur MCT2 fournit à l'antenne A1 un signal d'antenne SA1 qui est modulé en fonction du signal Vs1(TX1) et qui se répercute dans l'antenne A2 par effet de couplage électrique.

Le circuit de modulation de charge LM1 du coupleur CP2 est remplacé par un circuit de rétromodulation BSM1. qui module le coefficient de réflexion de l'antenne A2 afin d'assurer une rétromodulation par réflexion de champ électrique appelée "backscattering". Plus particulièrement, le circuit BSM1 reçoit le signal TX2 tel que fourni par le circuit capteur de courant CSCT et le convertit en une modulation du coefficient de réflexion de l'antenne A2 qui fait apparaître dans l'antenne A1 un signal de "backscattering" Ir(TX2) qui se mélange au signal d'antenne SA1.

Enfin, le démodulateur DCT1 du coupleur CP1 est remplacé par un démodulateur DCT3 configuré pour extraire le.signal de "backscattering" Ir1, et le démodulateur RF DCT2 du coupleur CP2 est remplacé par un démodulateur RF DCT4 configuré pour filtrer la fréquence f2 et extraire le signal TX1 du signal d'antenne SA1.

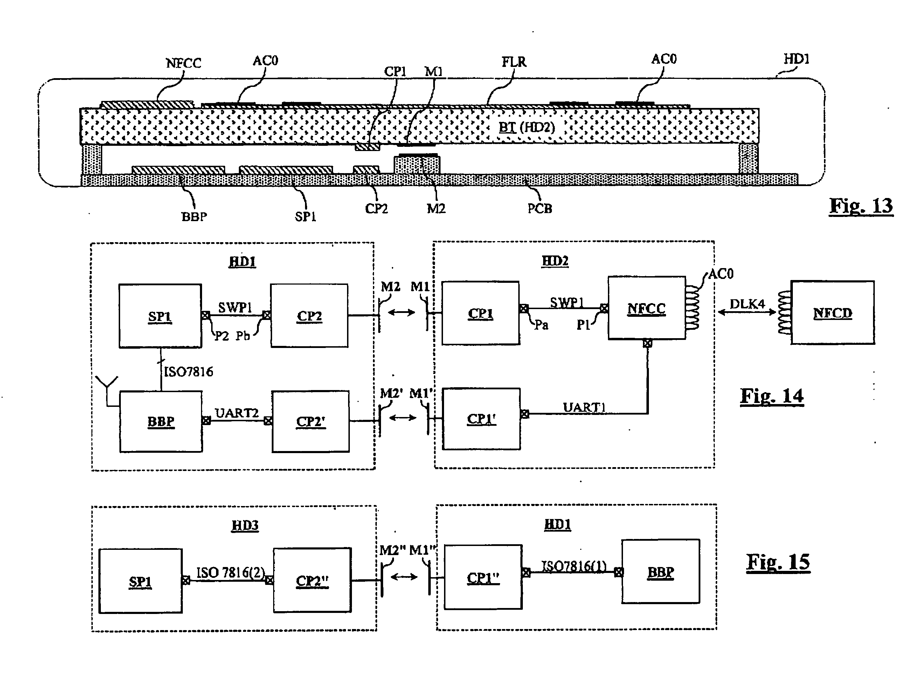

Dans le mode de réalisation représenté sur la figure 6, la bobine d'antenne AC1 émet le champ magnétique H1, et dans le mode de réalisation représenté sur la figure 8, l'antenne A1 émet le champ électrique E1. Le coupleur CP1 est donc actif et le coupleur CP2 est passif dans ces deux modes de réalisation. Dans d'autres modes de réalisation, il peut être prévu que le coupleur CP2 soit actif et le coupleur CP1 passif. Le fait de prévoir l'émission RF du côté du dispositif coupleur CP2. peut présenter un avantage dans certaines applications comme celle représentée sur la figure 5B. En effet, dans cette application le coupleur CP2 peut être agencé dans un téléphone mobile (HD1), et un téléphone mobile bénéficie d'une batterie puissante permettant de générer le signal RF sans que cela n'affecte de manière sensible la préserve d'énergie disponible. Dans d'autres applications, comme celle décrite plus loin en relation avec la figure 13, c'est au contraire le coupleur CP2 qui : est agencé à proximité de la batterie d'un téléphone mobile.

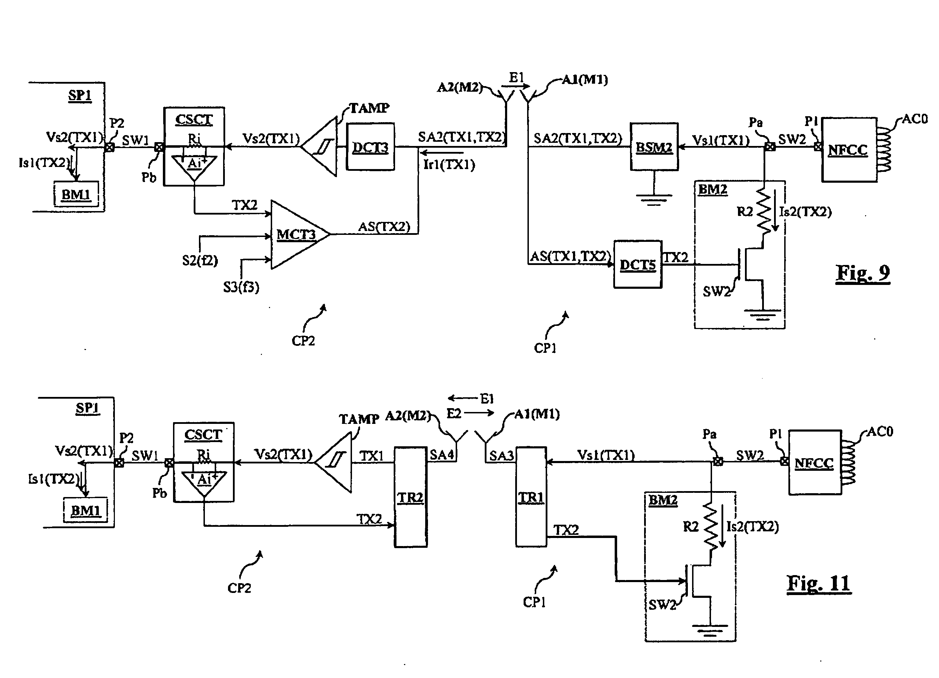

La figure 9 représente un mode de réalisation dans lequel le coupleur CP1 est passif et le coupleur CP2 est actif et émet le champ électrique E1. Le signal TX1 est transmis au coupleur CP2 par "backscattering" tandis que le signal TX2 est transmis au coupleur CP1 par émission active du champ électrique E1.

Ce mode de réalisation nécessite une précaution particulière, à savoir de ne pas omettre de transmettre par "backscattering" tous les fronts de montée du signal TX1. Selon le protocole SWP, ces fronts sont en effet utilisés comme signal d'horloge par le processeur SP1. A cet effet, le coupleur CP2 est équipé d'un modulateur RF MCT3 qui reçoit le signal TX2 (tel que fourni par le circuit CSCT) et qui fournit à l'antenne A2 un signal d'antenne SA2 ininterrompu, qui ne présente pas de période de modulation où son amplitude est nulle. De plus, le signal TX2 est de préférence transmis en utilisant une technique de modulation RF par saut de phase BPSK (une seule porteuse) ou de modulation RF par saut de fréquence FSK (deux porteuses) Ces techniques évitent de faire des trous de modulation d'amplitude dans la porteuse, qui pourraient altérer la réception des fronts d'horloge.

Le modulateur MCT3 représenté sur la figure 9 est de type FSK. Il reçoit deux porteuses S2(f2), S3(f3) de fréquences respectives f2 et f3, qui se situent par exemple dans le domaine UHF. Les valeurs 0 et 1 du signal TX2 sont codées sous forme de sauts de fréquences soit par codage direct (le 0 étant codé par la fréquence f1, le 1 par la fréquence f2, ou réciproquement) soit par codage de type Manchester (le 0 étant codé par une alternance f1-f2 des deux fréquences, le 1 étant codé par une alternance inverse f2-f1, ou inversement).

Un circuit de "backscattering" BSM2 est agencé ici au sein du coupleur CF1. Le circuit BSM2 reçoit la tension Vs1(TX1) et la convertit en une modulation du coefficient de réflexion de l'antenne A1 qui fait apparaître dans l'antenne A2 un signal de "backscattering" Ir(TX1) qui se mélange au signal d'antenne SA2. Le démodulateur DCT3 est ici agencé dans le coupleur CP2, et est configuré pour filtrer et démoduler le signal de "backscattering" généré par le circuit BSM2. Sa sortie fournit le .signal TX1 à l'amplificateur TAMP dont la sortie fournit le signal Vs2(TX1) au port P2 du processeur SP1. Enfin, un démodulateur RF DCT5 est agencé dans le coupleur CP1, pour décoder la modulation FSK (détection des sauts de fréquence f1-f2 ou f2-f1) et en extraire le signal TX2, qui est ensuite appliqué au circuit émulateur modulateur de courant BM2.

La figure 10 représente le profil du signal d'antenne AC2 en fonction des signaux modulés Vs1(TX1) et Ls1(TX2). Comme voulu, le signal AC2 est ininterrompu et présente la fréquence f1 quand Is1=1 et la fréquence f2. quand Is2=0 (codage direct). L'amplitude du signal AC2 est modulée en fonction de la tension Vs1(TX1), sous l'effet du circuit de "backscattering" BSM2. L'amplitude du signal SA2 présente ici une valeur crête affaiblie quand Vs1=1 et une valeur crête non affaiblie quand Vs1=0.

La figure 11 représente un mode de réalisation.dans lequel les deux coupleurs sont actifs. Le coupleur CP1 comporte un émetteur-récepteur RF TR1 qui émet un champ électrique E1 et le coupleur CP2 comporte un émetteur-récepteur RF TR2 qui émet un champ électrique E2. Ce mode de réalisation ne nécessite pas de rétromodulation, puisque chaque coupleur module le champ électrique qu'il émet en fonction des signaux TX1, TX2 à émettre. Ainsi, l'émetteur-récepteur TR1 reçoit la tension Vs1(TX1) et applique à l'antenne A1 un signal d'antenne SA3 qu'il module en fonction du signal TX1 (modulation d'amplitude, de phase ou de fréquence), pour que l'antenne émette le champ électrique E1. L'émetteur-récepteur TR2 reçoit le signal TX2 tel que fourni par le circuit capteur de courant CSCT et applique à l'antenne A2 un signal d'antenne SA4 qui est modulé en fonction du signal TX2, pour que l'antenne émette le champ électrique E2. L'émetteur-récepteur TR1 reçoit également le champ électrique E2 et le démodule pour fournir le signal TX2 au circuit émulateur modulateur de courant BM2. Réciproquement, l'émetteur-récepteur TR2 reçoit le champ électrique E1 et le démodule pour fournir le signal TX1 à l'amplificateur TAMP.

Chaque antenne A1, A2 reçoit donc le signal d'antenne SA3, SA4, l'un lui étant appliqué, l'autre étant reçu par couplage. La différentiation des champs E1, E2 et des signaux d'antenne correspondants SA3, SA4 peut être faite dans le domaine fréquentiel ou dans le domaine temporel. Dans le premier cas, les signaux SA3, SA4 présentent des fréquences différentes et peuvent être séparés par un filtrage approprié. Des antennes différentes pourraient également être prévues dans chaque coupleur, pour d'une part émettre le champ E1 ou E2 et d'autre part recevoir le champ E2 ou E1 émis par l'autre coupleur. Dans ce second cas, les champs E1, E2 sont émis en alternance et la transmission des signaux TX1, TX2 s'effectue en mode unidirectionnel (half-duplex) au lieu d'être faite en mode bidirectionnel (full-duplex). L'émetteur-récepteur TR2 est silencieux pendant que l'émetteur-récepteur TR1 émet le champ E1, et assure la démodulation du signal d'antenne reçu SA3. Ensuite, 1'émetteur-récepteur TR2 émet le champ E2, l'émetteur-récepteur TR1 est silencieux et assure la démodulation du signal d'antenne reçu SA4.

Les figures 12A, 12B illustrent la transmission des signaux TX1, TX2 en mode unidirectionnel alterné et représentent respectivement le signal d'antenne SA3(TX1) et le signal d'antenne SA4(TX2). Le signal SA4 est émis pendant la première demi-période du signal Vs1(TX1), la période d'horloge T étant fournie par le signal Vs. Le signal SA3 est émis pendant la seconde demi-période d'horloge. L'émission des signaux TX1, TX2 peut être faite de toute manière connue, par exemple par codage Manchester au moyen d'un signal RF à une seule porteuse, comme représenté sur les figures 12A, 12B. Dans ce cas, le signal TX1=0 est codé pendant la seconde demi-période par une absence d'émission du champ E1 pendant un quart de période, suivie d'une émission du champ pendant le quart de période restant. Inversement, le signal TX1=1 est codé pendant la seconde demi-période par une émission du champ pendant un quart de période, suivie d'une absence d'émission du champ pendant le quart de période restant. De façon similaire, le signal TX2=0 est codé pendant la première demi-période par une absente d'émission du champ E2 pendant un quart de période, suivie d'une émission du champ pendant le quart de période restant. Le signal TX2=1 est codé pendant la première demi-période par une émission du champ pendant un quart de période, suivie d'une absence d'émission du champ pendant le quart de période restant.

La figure 13 représente très schématiquement un exemple d'application des coupleurs CP1, CP2 dans un téléphone mobile HD1. Le téléphone comprend une carte mère PCB sur laquelle sont montés le processeur en bande de base BBP, le processeur sécurisé SP1 de la carte SIM, le coupleur CP2 et le moyen de couplage M2. Le processeur SP1 est connecté au processeur BBP et au coupleur CP2 par l'intermédiaire d'une fente d'insertion de carte SIM et d'un connecteur électrique qui ne sont' pas représentés dans un souci de simplicité du schéma. Le téléphone comporte également une batterie amovible BT formant un support portable HD2. La batterie BT reçoit le contrôleur NFCC et sa bobine d'antenne AC0, ainsi que le coupleur CP1. La bobine d'antenne AC0 est optionnellement agencée sur une couche de.ferrite FLR magnétiquement conductrice afin d'isoler la batterie et la carte mère PCB du champ magnétique que la bobine d'antenne génère. Le moyen de couplage M1 est agencé sur la face arrière de la batterie BT, afin de se trouver en face du moyen de couplage M2. Les moyens M1, M2 sont par exemple des plaques de couplage capacitif ou des bobines d'antenne. Ainsi, le processeur SP1 peut établir une liaison de données (par exemple SWP) avec le contrôleur NFCC, par l'intermédiaire des coupleurs CP1, CP2.

Cet exemple d'application présente l'avantage de permettre l'intégration d'un contrôleur NFC dans un téléphone mobile sans modifier substantiellement l'architecture de la carte mère du téléphone, seuls le coupleur CP2 et le moyen de couplage M2 devant y être ajoutés. Des batteries de téléphone mobile peuvent ainsi être commercialisées avec un équipement NFC.

En référence à la figure 5B, l'utilisation des coupleurs CP1, CP2 pour relier le processeur SP1 et le contrôleur NFCC n'exclut pas la prévision d'une liaisons sans fil entre le processeur en bande de base BBP et le contrôleur NFCC, au moyen d'émetteurs-récepteurs WL1, WL2 Wifi ou Bluetooth®. Le processeur SP1 peut en outre être relié au processeur BBP via un bus ISO 7816.

Il apparaîtra clairement à l'homme de l'art que des coupleurs selon l'invention sont susceptibles de diverses variantes et modes de réalisation. Comme précédemment indiqué, le transfert de données par couplage, au moyen d'au moins une porteuse RF, peut reposer sur diverses techniques de modulation connues, à savoir modulation d'amplitude, modulation par sauts de phase (BPSK), par sauts de fréquence (FSK), etc.

Sur les figures précédemment décrites, le circuit capteur de courant CSCT comprend une résistance Ri de faible valeur, pour transformer le courant Is1 en une tension, ainsi qu'un amplificateur différentiel Ai connecté aux bornes de la résistance Ri, dont la sortie fournit le signal TX2. D'autres modes de réalisation du circuit CSCT peuvent être prévus par l'homme de l'art, notamment des modes de réalisation comprenant un miroir de courant et n'introduisant aucune chute de tension proportionnelle au courant traversant le circuit CSCT.

Des coupleurs selon l'invention sont également susceptibles de diverses autres applications. Par exemple, comme montré sur la figure 14, des coupleurs sans contact CP1'-CP2' peuvent être utilisés pour relier le processeur BBP au contrôleur NFCC. Le coupleur CP1' est connecté à un port UART du contrôleur NFCC et émule un bus asynchrone UART1 tandis que le coupleur CP2 est connecté à un port UART du processeur BBP et émule un bus asynchrone UART2, de sorte que les processeurs BBP et NFCC échangent des données comme si leurs ports UART étaient directement reliés par une liaison filaire.

Comme illustré sur la figure 15, des coupleurs sans contact CP1", CP2" peuvent également être utilisés dans une application "non-NFC", par exemple pour relier le processeur SP1 de carte SIM au processeur en bande de base BBP, avec émulation du bus ISO 7816 par les coupleurs. Dans ce cas, le coupleur CP1" est connecté au .. port dit "I/O" du processeur BBP et émule une liaison ISO 7816(1) et le coupleur CP2" est connectée au port "I/O" du processeur SP1 et émule une liaison ISO 7816(2), de sorte que les processeurs SP1 et BBP échangent des données comme s'ils étaient directement reliés par bus filaire ISO 7816.

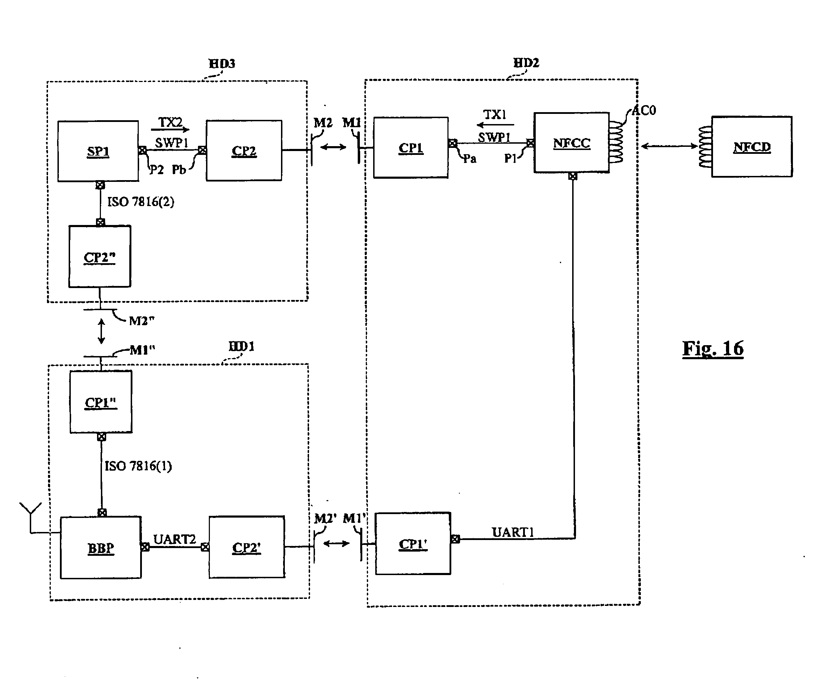

La figure 16 représente un chipset NFC comprenant les processeurs SP1, BBP et le contrôleur NFCC, ainsi.que les coupleurs SP1, SP2, SP1, SP2', SP1", SP2" précédemment décrits. Le processeur BBP est monté sur un premier support portable HD1, le contrôleur NFCC est monté sur un second support portable HD2 et le processeur SP1 est monté sur un troisième support portable HD3. Le processeur SP1 est relié au contrôleur NFCC par l'intermédiaire des coupleurs CP1, CP2 et un bus SWP. Le contrôleur. NFCC est relié au processeur BBP par l'intermédiaire des coupleurs CP1', CP2' et un bus asynchrone de type UART. Le processeur BBP est relié au processeur SP1 par l'intermédiaire des coupleurs CP1", CP2" et un bus ISO 7816.

## Revendications

1. Procédé pour établir une liaison de données entre un premier processeur (NFCC, BBP) et un second processeur (SP1), comprenant des étapes consistant à :
- par l'intermédiaire d'un port (P1) de communication à contact du premier processeur (NFCC, BBP), émettre un premier signal (tel) porteur de données (DTX1) sous forme d'un premier signal modulé (Vs1),
- par l'intermédiaire d'un port (P2) de communication à contact du second processeur (SP1), émettre un second signal (TX2) porteur de données (DTX2) sous forme d'un second signal modulé (Is1),
procédé **caractérisé en ce qu'**il comprend des étapes consistant à :
- prévoir un premier coupleur (CP1) et le connecter au port de communication à contact du premier processeur (NFCC, BBP),
- prévoir un second coupleur (CP1) et le connecter au port de communication à contact du second processeur (SP1).
- établir un couplage sans contact entre les premier et second coupleur, et
- par l'intermédiaire des coupleurs, et au moyen d'au moins un signal RF (H1, Vac, E1, SA1, SA2, SA3, E2, SA4), transférer, le premier signal (TX1) porteur de données au port de communication à contact (P2) du second processeur (SP2) et transférer le second signal (TX2) porteur de données au port de communication à contact (P1) du premier processeur (NFCC, BBP).

2. Procédé selon la revendication 1, comprenant des étapes consistant à :
- au moyen du premier coupleur (CP1) :
- recevoir ou capter le premier signal modulé (Vs1), en extraire le premier signal (TX1) porteur de données et transférer le premier signal porteur de données au second coupleur au moyen du signal RF (H1, Vac, E1, SA1, SA2, SA3),
- au moyen du second coupleur (CP2) :
- recevoir ou capter le second signal modulé (Is1), en extraire le second signal (TX2) porteur de données et transférer le second signal porteur de données au premier coupleur au moyen du signal RF ou d'un autre signal RF (E2, SA4),
- recevoir le premier signal (TX1) porteur de données et fournir au port de communication à contact du second processeur (SP1) un troisième signal modulé (Vs2) qui émule le premier signal modulé (Vs1), et
- au moyen du premier coupleur (CP1) :
- redevoir le second signal (TX2) porteur de données et fournir au port de communication à contact du premier processeur (NFCC, BBP) un quatrième signal modulé (Is2) qui émule le second signal modulé (Is1).

3. Procédé selon la revendication 2, comprenant des étapes consistant à :
- au moyen du premier coupleur (CP1), émettre le signal RF et moduler le signal RF de manière qu'il présente un paramètre qui est moulé en fonction du premier signal (TX1) porteur de données,
- au moyen du second coupleur (CP2), démoduler le signal RF afin de récupérer le premier signal (TX1) porteur de données, et injecter dans le signal RF un signal de rétromodulation (Ir1) qui présente un paramètre qui est modulé en fonction du second signal (TX2) porteur de données, et
- au moyen du premier coupleur (CP1), capter le signal de rétromodulation et le démoduler afin de récupérer le second signal (TX2) porteur de données.

4. Procédé selon la revendication 2, comprenant des étapes consistant à :
- au moyen du premier coupleur (CP1), émettre un premier signal RF (H1, Vac, E1, SA1, SA2, SA3) et moduler le premier signal RF de manière qu'il présente un paramètre qui est modulé en fonction du premier signal (TX1). porteur de données,
- au moyen du second coupleur (CP2), démoduler le premier signal RF afin de récupérer le premier signal (TX1) porteur de données, émettre un second signal RF (E2, SA4) et moduler le second signal RF de manière qu'il présente un paramètre qui est modulé en fonction du second signal (TX2) porteur de données, et
- au moyen du premier coupleur (CP1), démoduler le second signal RF afin de récupérer le second signal (TX2) porteur de données.

5. Procédé selon l'une des revendications. 1 à 4; dans lequel le premier signal modulé (Vs1) est une tension électrique modulée et le second signal modulé (Is1) est un signal de courant modulé en présence de ladite tension électrique modulée.

6. Procédé selon l'une des revendications 1 à 5, dans lequel.
- le premier processeur est un contrôleur NFC (NFCC) comprenant en sus du port de communication à contact un circuit d'interface sans contact (NFCI) fonctionnant par couplage inductif, et
- le second processeur est un processeur hôte (SP1) du contrôleur NFC.

7. Procédé selon l'une des revendications 1 à 6, dans lequel le second processeur est un processeur sécurisé (SP1) de carte SIM.

8. procédé selon l'une des revendications 1 à 7, dans lequel le couplage sans contact est un couplage inductif, un couplage à champ électrique ou un couplage capacitif.

9. Procédé pour conduire une transaction entre le processeur hôte (SP1) d'un contrôleur NFC (NFCC) et un dispositif NFC (NFCD), comprenant une étape d'établissement d'une liaison de données entre le processeur hôte (SP1) et le dispositif. NFC (NFCD) par l'intermédiaire du contrôleur NFC (NFCC),
**caractérisé en ce que** l'étape d'établissement d'une liaison de données entre le processeur hôte (SP1) et le dispositif NFC (NFC) comprend l'établissement d'une liaison de données entre le processeur hôte et le contrôleur NFC (NFC) conduite conformément au procédé selon l'une des revendications 1 à 8.

10. Dispositif de traitement et de transfert de données comprenant :
- un premier processeur (NFCC, BBP) configuré pour fournir, sur un port de communication à contact (P1), un premier signal (TX1) porteur de données (DTX1) sous forme d'un premier signal modulé (Vs1),
- un second processeur (SP1) configuré pour fournir, sur un port de communication à contact (P2), un second signal (TX2) porteur de données (DTX2) sous forme d'un second signal modulé (Is1),
**caractérisé en ce qu'**il comprend :
- un premier coupleur. (CP1) connecté au port de communication à contact (P1) du premier processeur (NFCC, BBP),
- un second coupleur (CP1) connecté au port de communication à contact (P2) du second processeur (SP1), et dans lequel :
- les coupleurs sont couplés par un couplage sans contact, et
- le premier coupleur (CP1) est configuré pour :
- recevoir ou capter le premier signal modulé (Vs1), en extraire le premier signal (TX1) porteur de donnés et transférer le premier signal porteur de données au second coupleur, au moyen d'un signal RF (H1, Vac, E1, SA1, SA2, SA3),
- le second coupleur (CP2) est configuré pour :
- recevoir ou capter le second signal modulé (Is1), en extraire le second signal (TX2) porteur de données et transférer le second signal porteur de données au premier coupleur, au moyen du signal RF ou d'un autre signal RF (E2, SA4), est
- recevoir le premier signal (TX1) porteur de donnée, et fournier au pot de communication à contact (P2) du second processeur (SP1) un troisième signal modulé (Vs2) qui émule le premier signal modulé (Vs1), et
- le premier coupleur (CP1) est également configuré pour :
- recevoir le second signal (TX2) porteur de données et fournir au port de communication à contact (P1) du premier processeur (NFCC, BBP) un quatrième signal modulé (Is2) qui émule le second signal modulé (Is1).

11. Dispositif de traitement et de transfert de données selon la revendication 10, dans lequel :
- le premier coupleur (CP1) est configuré pour :
- émette le signal RF et moduler le signal RF de manière qu'il présente un paramètre qui est modulé en fonction du premier signal (TX1) porteur de données,
- le second coupleur (CP2) est configuré pour :
- injecter dans le signal RF un signal de rétromodulation (Ir1) qui présente un paramètre qui est modulé en fonction du second signal (TX2) porteur de données,
- démoduler le signal RF afin de récupérer le premier signal (TX1) porteur de données, et
- le premier coupleur (CP1) est également configuré pour :
- capter le signal de rétromodulation et le démoduler afin de récupérer le second signal (TX2) porteur de données.

12. Dispositif de traitement et de transfert de données selon la revendication 10, dans lequel :
- le premier coupeur (CP1) est configuré pour :
- émettre un premier signal RF (H1, Vac, E1, SA1, SA2, SA3) et moduler le premier signal RF de manière qu'il présente un paramètre qui est modulé en fonction du premier signal (TX1) porteur de données,
- le second coupleur (CP2) est configuré pour :
- démoduler le premier signal RF afin de récupérer le premier signal (TX1) porteur de données,
- émettre un second signal RF (E2, SA4) et moduler le second signal RF de manière qu'il présente un paramètre qui est modulé en fonction du second signal (TX2) porteur de données, et
- le premier coupleur (CP1) est également configuré pour :
- démoduler le second signal RF afin de récupérer le second signal (TX2) porteur de données.

13. Dispositif de traitement et de transfert de données selon l'une des revendications 10 à 12, dans lequel le premier signal modulé (Vs1) est une tension électrique modulée et le second signal modulé (Is1) un signal de courant modulé en présence de ladite tension électrique modulée.

14. Dispositif de traitement et de transfert de données selon l'une des revendications 10 .à 13, dans lequel :
- le premier processeur est un contrôleur NFC (NFC) comprenant en outre un circuit d'interface sans contact (NFCI) fonctionnant par couplage inductif, et
- le second processeur est un processeur hôte (SP1) du contrôleur NFC.

15. Dispositif de traitement et de transfert de données selon l'une des revendications 10 à 14, dans lequel le couplage sans contact est un couplage inductif, un couplage à champ électrique ou un couplage capacitif.

## Claims

1. A process for establishing a data link between a first processor (NFCC, BPP) and a second processor (SP1), comprising the steps of:
- by means of a contact communication port (P1) of the first processor (NFCC, BPP), emitting a first data (DTX1) carrying signal (TX1) in the form of a first modulated signal (Vs1),
- by means of a contact communication port (P2) of the second processor (SP1), emitting a second data (DTX2) carrying signal (TX2) in the form of a second modulated signal (Is1),
the process **characterized in that** it comprises steps of:
- providing a first coupler (CP1) and connecting it to the contact communication port of the first processor (NFCC, BPP),
- providing a second coupler (CP2) and connecting it to the contact communication port of the second processor (SP1),
- establishing a contactless link between the first and second couplers, and
- by means of the couplers and by means of at least one RF signal (H1, Vac, E1, SA1, SA2, SA3, E2, SA4), transferring the first data carrying signal (TX1) to the contact communication port (P2) of the second processor (SP2) and transferring the second data carrying signal (TX2) to the contact communication port (P1) of the first processor (NFCC, BPP).

2. A process according to claim 1, comprising steps of:
- by means of the first coupler (CP1):
- receiving or sensing the first modulated signal (Vs1), extracting from it the first data carrying signal (TX1) and transferring the first data carrying signal to the second coupler by means of the RF signal (H1, Vac, E1, SA1, SA2, SA3),
- by means of the second coupler (CP2):
- receiving or sensing the second modulated signal (Is1), extracting from it the second data carrying signal (TX2) and transferring the second data carrying signal to the first coupler by means of the RF signal or another RF signal (E2, SA4),
- receiving the first data carrying signal (TX1) and supplying to the contact communication port of the second processor (SP1) a third modulated signal (Vs2) that emulates the first modulated signal (Vs1), and
- by means of the first coupler (CP1):
- receiving the second data carrying signal (TX2) and supplying to the contact communication port of the first processor (NFCC, BPP) a fourth modulated signal (Is2) that emulates the second modulated signal (Is1).

3. A process according to claim 2, comprising steps of:
- by means of the first coupler (CP1), emitting the RF signal and modulating the RF signal in a manner such that it has a parameter that is modulated as a function of the first data carrying signal (TX1),
- by means of the second coupler (CP2), demodulating the RF signal in order to recover the first data carrying signal (TX1), and injecting in the RF signal a backscattered signal (Ir1) having a parameter modulated as a function of the second data carrying signal (TX2), and
- by means of the first coupler (CP1), sensing the backscattered signal and demodulating it in order to recover the second data carrying signal (TX2).

4. A process according to claim 2, comprising steps of:
- by means of the first coupler (CP1), emitting a first RF signal (H1, Vac, E1, SA1, SA2, SA3) and modulating the first RF signal in a manner such that it has a parameter that is modulated as a function of the first data carrying signal (TX1),
- by means of the second coupler (CP2), demodulating the first RF signal in order to recover the first data carrying signal (TX1), emitting a second RF signal (E2, SA4) and modulating the second RF signal in a manner such that it has a parameter that is modulated as a function of the second data carrying signal (TX2), and
- by means of the first coupler (CP1), demodulating the second RF signal in order to recover the second data carrying signal (TX2).

5. A process according to one of claims 1 to 4, wherein the first modulated signal (Vs1) is an electrically modulated voltage and the second modulated signal (Is1) is a current signal modulated in the presence of the said electrically modulated voltage.

6. A process according to one of claims 1 to 5, wherein:
- the first processor is an NFC controller (NFCC) that comprises, in addition to a contact communication port, a contactless interface circuit (NFCI) functioning by inductive coupling, and
- the second processor is a host processor (SP1) of the NFC controller.

7. A process according to one of claims 1 to 6, wherein the second processor is a secure processor (SP1) of a SIM card.

8. A process according to one of claims 1 to 7, wherein the contactless coupling is an inductive coupling, an electrical field coupling or a capacitive coupling.

9. A process for conducting a transaction between the host processor (SP1) of an NFC controller (NFCC) and an NFC device (NFCD), comprising a step of establishing a data link between the host processor (SP1) and the NFC device (NFCD) by means of the NFC controller (NFCC),
**characterized in that** the step of establishing a data link between the host processor (SP1) and the NFC device (NFCD) comprises the establishment of a data link between the host processor and the NFC controller (NFCC) conducted according to the process according to one of claims 1 to 8.

10. A data treatment and transfer device comprising:
- a first processor (NFCC, BPP) configured to supply, upon a contact communication port (P1), a first data (DTX1) carrying signal (TX1) in the form of a first modulated signal (Vs1),
- a second processor (SP1) configured to supply, upon a contact communication port (P2), a second data (DTX2) carrying signal (TX2) in the form of a second modulated signal (Is1),
**characterized in that** it comprises:
- a first coupler (CP1) connected to the contact communication port (P1) of the first processor (NFCC, BPP),
- a second coupler (CP1) connected to the contact communication port (P2) of the second processor (SP1),
and wherein:
- the couplers are coupled by a contactless coupling, and
- the first coupler (CP1) is configured to:
- receive or sense the first modulated signal (Vs1), extract from it the first data carrying signal (TX1) and transfer the first data carrying signal to the second coupler, by means of an RF signal (H1, Vac, E1, SA1, SA2, SA3),
- the second coupler (CP2) is configured to:
- receive or sense the second modulated signal (Is1), extract from it the second data carrying signal (TX2) and transfer the second data carrying signal to the first coupler, by means of the RF signal or of another RF signal (E2, SA4), and
- receive the first data carrying signal (TX1), and supply to the contact communication port (P2) of the second processor (SP1) a third modulated signal (Vs2) that emulates the first modulated signal (Vs1), and
- the first coupler (CP1) is also configured to:
- receive the second data carrying signal (TX2) and supply to the contact communication port (P1) of the first processor (NFCC, BPP) a fourth modulated signal (Is2) that emulates the second modulated signal (Is1).

11. A data treatment and transfer device according to claim 10, wherein:
- the first coupler (CP1) is configured to:
- emit the RF signal and modulate the RF signal in a manner such that it has a parameter that is modulated as a function of the first data carrying signal (TX1),
- the second coupler (CP2) is configured to:
- inject, in the RF signal, a backscattered signal (Ir1) having a parameter modulated as a function of the second data carrying signal (TX2),
- demodulate the RF signal in order to recover the first data carrying signal (TX1), and
- the first coupler (CP1) is also configured to:
- sense the backscattered signal and demodulate it in order to recover the second data carrying signal (TX2).

12. A data treatment and transfer device according to claim 10, wherein:
- the first coupler (CP1) is configured to:
- emit a first RF signal (H1, Vac, E1, SA1, SA2, SA3) and modulate the first RF signal in a manner such that it has a parameter that is modulated as a function of the first data carrying signal (TX1),
- the second coupler (CP2) is configured to:
- demodulate the first RF signal in order to recover the first data carrying signal (TX1),
- emit a second RF signal (E2, SA4) and modulate the second RF signal in a manner such that it has a parameter that is modulated as a function of the second data carrying signal (TX2), and
- the first coupler (CP1) is also configured to:
- demodulate the second RF signal in order to recover the second data carrying signal (TX2).

13. A data treatment and transfer device according to one of claims 10 to 12, wherein the first modulated signal (Vs1) is an electrically modulated voltage and the second modulated signal (Is1) is a current signal modulated in the presence of the said electrically modulated voltage.

14. A data treatment and transfer device according to one of claims 10 to 13, wherein:
- the first processor is an NFC controller (NFCC) also comprising a contactless interface circuit (NFCI) functioning by inductive coupling, and
- the second processor is a host processor (SP1) of the NFC controller.

15. A data treatment and transfer device according to one of claims 10 to 14, wherein the contactless coupling is an inductive coupling, an electrical field coupling or a capacitive coupling.

## Patentansprüche

1. Verfahren zum Aufbauen einer Datenverbindung zwischen einem ersten Prozessor (NFCC, BBP) und einem zweiten Prozessor (SP1), umfassend Schritte, die darin bestehen:
- ein erstes Daten (DTX1) tragendes Signal (TX1) in Form eines ersten modulierten Signals (Vs1) über einen kontaktbehafteten Kommunikationsport (P1) des ersten Prozessors (NFCC, BBP) zu senden,
- ein zweites Daten (DTX2) tragendes Signal (TX2) in Form eines zweiten modulierten Signals (Is1) über einen kontaktbehafteten Kommunikationsport (P2) des zweiten Prozessors (SP1) zu senden,
**dadurch gekennzeichnet, dass** es Schritte umfasst, die darin bestehen:
- einen ersten Koppler (CP1) vorzusehen und ihn mit dem kontaktbehafteten Kommunikationsport des ersten Prozessors (NFCC, BBP) zu verbinden,
- einen zweiten Koppler (CP1) vorzusehen und ihn mit dem kontaktbehafteten Kommunikationsport des zweiten Prozessors (SP1) zu verbinden,
- eine kontaktlose Kopplung zwischen dem ersten und dem zweiten Koppler herzustellen, und
- über die Koppler, und anhand wenigstens eines RF-Signals (H1, Vac, E1, SA1, SA2, SA3, E2, SA4), das erste Daten tragende Signal (TX1) auf den kontaktbehafteten Kommunikationsport (P2) des zweiten Prozessors (SP2) zu übertragen und das zweite Daten tragende Signal (TX2) auf den kontaktbehafteten Kommunikationsport (P1) des ersten Prozessors (NFCC, BBP) zu übertragen.

2. Verfahren nach Anspruch 1, umfassend Schritte, die darin bestehen:
- anhand des ersten Kopplers (CP1):
- das erste modulierte Signal (Vs1) zu empfangen oder aufzufangen, das erste Daten tragende Signal (TX1) daraus zu extrahieren und das erste Daten tragende Signal anhand des RF-Signals (H1, Vac, E1, SA1, SA2, SA3) auf den zweiten Koppler zu übertragen,
- anhand des zweiten Kopplers (CP2):
- das zweite modulierte Signal (Is1) zu empfangen oder aufzufangen, das zweite Daten tragende Signal (TX2) daraus zu extrahieren und das zweite Daten tragende Signal anhand des RF-Signals oder eines anderen RF-Signals (E2, SA4) auf den ersten Koppler zu übertragen,
- das erste Daten tragende Signal (TX1) zu empfangen und an den kontaktbehafteten Kommunikationsport des zweiten Prozessors (SP1) ein drittes moduliertes Signal (Vs2) zu liefern, das das erste modulierte Signal (Vs1) emuliert, und
- anhand des ersten Kopplers (CP1):
- das zweite Daten tragende Signal (TX2) zu empfangen und an den kontaktbehafteten Kommunikationsport des ersten Prozessors (NFCC, BBP) ein viertes moduliertes Signal (Is2) zu liefern, das das zweite modulierte Signal (Is1) emuliert.

3. Verfahren nach Anspruch 2, umfassend Schritte, die darin bestehen:
- anhand des ersten Kopplers (CP1) das RF-Signal zu senden und das RF-Signal so zu modulieren, dass es einen abhängig von dem ersten Daten tragenden Signal (TX1) modulierten Parameter aufweist,
- anhand des zweiten Kopplers (CP2) das RF-Signal zu demodulieren, um das erste Daten tragende Signal (TX1) rückzugewinnen, und in das RF-Signal ein Rückmodulationssignal (Ir1) zu injizieren, das einen abhängig von dem zweiten Daten tragenden Signal (TX2) modulierten Parameter aufweist, und
- anhand des ersten Kopplers (CP1) das Rückmodulationssignal aufzufangen und es zu demodulieren, um das zweite Daten tragende Signal (TX2) rückzugewinnen.

4. Verfahren nach Anspruch 2, umfassend Schritte, die darin bestehen:
- anhand des ersten Kopplers (CP1) ein erstes RF-Signal (H1, Vac, E1, SA1, SA2, SA3) zu senden und das erste RF-Signal so zu modulieren, dass es einen abhängig von dem ersten Daten tragenden Signal (TX1) modulierten Parameter aufweist,
- anhand des zweiten Kopplers (CP2) das erste RF-Signal zu demodulieren, um das erste Daten tragende Signal (TX1) rückzugewinnen, ein zweites RF-Signal (E2, SA4) zu senden und das zweite RF-Signal so zu modulieren, dass es einen abhängig von dem zweiten Daten tragenden Signal (TX2) modulierten Parameter aufweist, und
- anhand des ersten Kopplers (CP1) das zweite RF-Signal zu demodulieren, um das zweite Daten tragende Signal (TX2) rückzugewinnen.

5. Verfahren nach einem der Ansprüche 1 bis 4, bei dem das erste modulierte Signal (Vs1) eine modulierte elektrische Spannung ist und das zweite modulierte Signal (Is1) bei Vorhanden der genannten modulierten elektrischen Spannung ein moduliertes Stromsignal ist.

6. Verfahren nach einem der Ansprüche 1 bis 5, bei dem:
- der erste Prozessor ein NFC-Kontroller (NFCC) ist, der zusätzlich zu dem kontaktbehafteten Kommunikationsport eine kontaktlose, durch induktive Kopplung betriebene Schnittstellenleitung (NFCI) umfasst, und
- der zweite Prozessor ein Host-Prozessor (SP1) des NFC-Kontrollers ist.

7. Verfahren nach einem der Ansprüche 1 bis 6, bei dem der zweite Prozessor ein gesicherter SIM-Karten-Prozessor (SP1) ist.

8. Verfahren nach einem der Ansprüche 1 bis 7, bei dem die kontaktlose Kopplung entweder eine induktive Kopplung, eine Spannungsfeld-Kopplung oder eine kapazitive Kopplung ist.

9. Verfahren zur Durchführung einer Transaktion zwischen dem Host-Prozessor (SP1) eines NFC-Kontrollers (NFCC) und einer NFC-Vorrichtung (NFCD), umfassend einen Schritt des Aufbauens einer Datenverbindung zwischen dem Host-Prozessor (SP1) und der NFC-Vorrichtung (NFCD) über den NFC-Kontroller (NFCC),
**dadurch gekennzeichnet, dass** der Schritt des Aufbauens einer Datenverbindung zwischen dem Host-Prozessor (SP1) und der NFC-Vorrichtung (NFCD) das Aufbauen einer Datenverbindung zwischen dem Host-Prozessor und dem NFC-Kontroller (NFCC) umfasst, die entsprechend dem Verfahren nach einem der Ansprüche 1 bis 8 aufgebaut wird.

10. Vorrichtung zur Verarbeitung und Übertragung von Daten, umfassend:
- einen ersten Prozessor (NFCC, BBP), der so konfiguriert ist, ein erstes Daten (DTX1) tragendes Signal (TX1) in Form eines ersten modulierten Signals (Vs1) an einen kontaktbehafteten Kommunikationsport (P1) zu liefern,
- einen zweiten Prozessor (SP1), der so konfiguriert ist, ein zweites Daten (DTX2) tragendes Signal (TX2) in Form eines zweiten modulierten Signals (Is1) an einen kontaktbehafteten Kommunikationsport (P2) zu liefern, **dadurch gekennzeichnet, dass** es folgendes umfasst:
- einen ersten mit dem kontaktbehafteten Kommunikationsport (P1) des ersten Prozessors (NFCC, BBP) verbundenen Koppler (CP1),
- einen zweiten mit dem kontaktbehafteten Kommunikationsport (P2) des zweiten Prozessors (SP1) verbundenen Koppler (CP1),
und bei dem:
- die Koppler durch eine kontaktlose Kopplung gekoppelt sind, und
- der erste Koppler (CP1) dazu konfiguriert ist,
- das erste modulierte Signal (Vs1) zu empfangen oder aufzufangen, das erste Daten tragende Signal (TX1) daraus zu extrahieren und das erste Daten tragende Signal anhand eines RF-Signals (H1, Vac, E1, SA1, SA2, SA3) auf den zweiten Koppler zu übertragen,
- der zweite Koppler (CP2) dazu konfiguriert ist,
- das zweite modulierte Signal (Is1) zu empfangen oder aufzufangen, das zweite Daten tragende Signal (TX2) daraus zu extrahieren und das zweite Daten tragende Signal anhand des RF-Signals oder eines anderen RF-Signals (E2, SA4) auf den ersten Koppler zu übertragen, und
- das erste Daten tragende Signal (TX1) zu empfangen, und an den kontaktbehafteten Kommunikationsport (P2) des zweiten Prozessors (SP1) ein drittes moduliertes Signal (Vs2) zu liefern, das das erste modulierte Signal (Vs1) emuliert, und
- der erste Koppler (CP1) auch dazu konfiguriert ist,
- das zweite Daten tragende Signal (TX2) zu empfangen und an den kontaktbehafteten Kommunikationsport (P1) des ersten Prozessors (NFCC, BBP) ein viertes moduliertes Signal (Is2) zu liefern, das das zweite modulierte Signal (Is1) emuliert.

11. Vorrichtung zur Verarbeitung und Übertragung von Daten nach Anspruch 10, bei der:
- der erste Koppler (CP1) dazu konfiguriert ist,
- das RF-Signal zu senden und das RF-Signal so zu modulieren, dass es einen abhängig von dem ersten Daten tragenden Signal (TX1) modulierten Parameter aufweist,
- der zweite Koppler (CP2) dazu konfiguriert ist,
- in das RF-Signal ein Rückmodulationssignal (Ir1) zu injizieren, das einen abhängig von dem zweiten Daten tragenden Signal (TX2) modulierten Parameter aufweist,
- das RF-Signal zu demodulieren, um das erste Daten tragende Signal (TX1) rückzugewinnen, und
- der erste Koppler (CP1) auch dazu konfiguriert ist,
- das Rückmodulationssignal aufzufangen und es zu demodulieren, um das zweite Daten tragende Signal (TX2) rückzugewinnen.

12. Vorrichtung zur Verarbeitung und Übertragung von Daten nach Anspruch 10, bei der:
- der erste Koppler (CP1) dazu konfiguriert ist,
- ein erstes RF-Signal (H1, Vac, E1, SA1, SA2, SA3) zu senden und das erste RF-Signal so zu modulieren, dass es einen abhängig von dem ersten Daten tragenden Signal (TX1) modulierten Parameter aufweist,
- der zweite Koppler (CP2) dazu konfiguriert ist,
- das erste RF-Signal zu demodulieren, um das erste Daten tragende Signal (TX1) rückzugewinnen,
- ein zweites RF-Signal (E2, SA4) zu senden und das zweite RF-Signal so zu modulieren, dass es einen abhängig von dem zweiten Daten tragenden Signal (TX2) modulierten Parameter aufweist, und
- der erste Koppler (CP1) auch dazu konfiguriert ist,
- das zweite RF-Signal zu demodulieren, um das zweite Daten tragende Signal (TX2) rückzugewinnen.

13. Vorrichtung zur Verarbeitung und Übertragung von Daten nach einem der Ansprüche 10 bis 12, bei der das erste modulierte Signal (Vs1) eine elektrische modulierte Spannung ist und das zweite modulierte Signal (Is1) ein bei Vorhanden der genannten modulierten elektrischen Spannung moduliertes Stromsignal ist.

14. Vorrichtung zur Verarbeitung und Übertragung von Daten nach einem der Ansprüche 10 bis 13, bei der:
- der erste Prozessor ein NFC-Kontroller (NFCC) ist, der dazu eine kontaktlose, durch induktive Kopplung betriebene Schnittstellenleitung (NFCI) umfasst, und
- der zweite Prozessor ein Host-Prozessor (SP1) des NFC-Kontrollers ist.

15. Vorrichtung zur Verarbeitung und Übertragung von Daten nach einem der Ansprüche 10 bis 14, bei der die kontaktlose Kopplung entweder eine induktive Kopplung, eine Spannungsfeld-Kopplung oder eine kapazitive Kopplung ist.
